# EUROPEAN PATENT APPLICATION

(11) **EP 4 487 696 A1**
(43) Date of publication of application: **08.01.2025**
(21) Application number: 23759614.3
(22) Date of filing: 01.02.2023
(51) Int. Cl.: A23L 27/00, A23L 5/00, A23J 3/04, A23J 3/08, A23J 3/14, A23J 3/16, A23J 3/18, A23J 3/20, A23J 3/30

(54) **OIL-IN-WATER EMULSION AND PRODUCTION METHOD THEREFOR**

(30) Priority: 28.02.2022 JP 2022029591
(71) Applicant: Fuji Oil Holdings Inc., Izumisano-shi, Osaka 598-8540 (JP)
(72) Inventor: MIZUSHIMA, Shigeki, Tsukubamirai-shi, Ibaraki 300-2436 (JP); UEYAMA, Tomoki, Izumisano-shi, Osaka 598-8540 (JP); KANO, Hiroshi, Izumisano-shi, Osaka 598-8540 (JP); INOUE, Ryota, Izumisano-shi, Osaka 598-8540 (JP)
(74) Representative: Becker, Eberhard
(86) International application number: PCT/JP2023/003285
(87) International publication number: WO 2023/162608

(57) **Abstract**

The present invention addresses the problem of producing, without using a synthetic emulsifier and/or organic solvent, an oil-in-water emulsion of not more than 100 nm which has excellent transparency, and applying the oil-in-water emulsion to foods, beverages, and the like. Used is an oil-in-water emulsion produced by combining: 0.5-35 mass% of an oil-based material; a protein material having the properties described below, in an amount of 30-1,200 mass% in terms of crude protein amount with respect to oil/fat materials; 1-80 mass% of an easily water soluble substance; and 5-70 mass% of water, wherein the diameter of emulsion particles is not more than 100 nm. The protein material has properties such that, after 30 minutes of heating, at 80°C, an aqueous solution thereof with a crude protein amount of 20 mass%, the viscosity measured at 25°C is not more than 10,000 mPa·s, and 0.22 M TCA solubilization rate is 30%-95%. Thus, it is possible to impart strong depth of flavor to a food or beverage to which the present emulsion has been added.

## Description

### Technical Field

The present invention relates to an oil-in-water emulsion which is a nanoemulsion and a method for producing the oil-in-water emulsion.

### Background Art

An emulsified product having an extremely small emulsion particle size of 200 nm or less is called a nanoemulsion. In addition, when the emulsion particle size is 100 nm or less, transparency is remarkably improved. (Non-Patent Document 1)

Many oily materials correspond to functional components, that is, physiologically active compounds, and are used for the development of functional foods; however, many of the oily materials are susceptible to deterioration during food processing or oxidative deterioration during storage, or have low solubility in water, and have low bioavailability. As a solution therefor, utilization of an oil-in-water emulsion which is a nanoemulsion is considered.

For example, Patent Document 1 discloses a method for producing a solubilized solution characterized by mixing from 1 to 70 parts by weight of a water-insoluble substance with from 1 to 90 parts by weight of a polyglycerin fatty acid ester, from 0.1 to 50 parts by weight of water, and from 1 to 90 parts by weight of a polyhydric alcohol, and emulsifying and solubilizing the mixture, Patent Document 2 discloses a method for producing a solubilized solution characterized by containing a polyhydric alcohol and an emulsifier having an HLB of 9 or more, Patent Document 3 discloses a tocopherol solubilized product characterized by mixing from 1 to 50 wt.% of tocopherol, from 1 to 90 wt.% of a saccharide, from 0.1 to 30 wt.% of an emulsifier, and from 1 to 10 wt.% of ethanol and solubilizing the mixture, and Patent Document 4 discloses an oil-in-water type emulsified composition containing phospholipid, triglyceride, a nonionic surfactant, and water, and having an average particle size of emulsified particles of 100 nm or less. All of them use a synthetic emulsifier as a main component.

Meanwhile, as an oil-in-water nanoemulsion using a natural emulsifier, Non-Patent Document 2 describes an emulsion using casein and having an emulsion particle size of from 92 to 220 nm. Non-Patent Document 3 describes a β-carotene emulsion using gelatin or casein and having an emulsion particle size of from 70 to 160 nm. Non-Patent Document 4 describes a β-carotene emulsion using WPI, sodium caseinate, and SPI and having an emulsion particle size of from 17 to 110 nm.

When a synthetic emulsifier or a low molecular weight natural emulsifier is used, a radius r of a theoretically minimum emulsion is determined by r = 3·Γ·ϕ/Cs. Γ is a surface excess concentration (adsorption amount, kg/m^2) of the emulsifier, Cs is an emulsifier concentration (kg/m^3), and ϕ is a volume fraction of a dispersed phase. That is, when the emulsifier concentration is increased, the emulsion particle size can be made fine. On the other hand, a polymer material is generally a hydrocolloid, and when this is used, emulsification treatment may not be performed even at a high concentration. In addition, since depletion interaction (depletion flocculation) occurs, an increase in concentration does not necessarily contribute to miniaturization. (Non-Patent Document 5)

A kokumi taste is considered to be a feeling recognized by the fact that oil and/or fat is perceived by taste cells. In recent years, the presence of an oil and/or fat taste has been proposed in addition to the five tastes which are components of a taste, and this is similar to this perception. (Non-Patent Document 6)

### Citation List

### Patent Document

Patent Document 1: JP S62-250941 A
Patent Document 2: JP 2004-208555 A
Patent Document 3: JP H2-83315 A
Patent Document 4: JP 2019-210222 A

### Non-Patent Documents

Non-Patent Document 1: Toshiyuki Suzuki, Color Material, 77 [10], 462-469 (2004) Basics on Emulsion Technology
Non-Patent Document 2: Zeeb, et al. (2014), Journal of Colloid and Interface Science, 433, 196-203.
Non-Patent Document 3: Medeiros et al. (2019). Food Chem. 270, 562? 572
Non-Patent Document 4: Chu et al., (2007). J. Am. Oil Chem. Soc. 84, 1053? 1062
Non-Patent Document 5: Satoshi Fujita, p. 51, (2006) Food technology: food emulsions: principles and practice, Saiwai Shobo
Non-Patent Document 6: Yasumatsu K et al., "Fatty acid taste quality information via GPR120 in the anterior tongue of mice" Acta Physiologica, e13215 (2018)

### Summary of Invention

### Technical Problem

In Patent Documents 1 to 4, a synthetic emulsifier is used as a main component. Also in Non-Patent Documents 2 to 4, it is necessary to use butanol or hexane, and it is difficult to adapt to foods (Non-Patent Documents 2 and 4), and Tween 20 which is a synthetic emulsifier is blended (Non-Patent Document 3).

An object of the present invention is to provide an oily material-containing emulsion having excellent transparency without using a synthetic emulsifier and/or an organic solvent having a boiling point lower than that of water when obtaining an oil-in-water emulsion which is a nanoemulsion applicable to food and drink.

### Solution to Problem

As a result of intensive studies to solve the above problems, the present inventors have found that an oil-in-water emulsion that is a nanoemulsion not using a synthetic emulsifier, an organic solvent, or the like can be obtained by using a protein material having specific properties, and have completed the present invention.

That is, the present invention is:
(1) An oil-in-water emulsion having an emulsion particle size of 100 nm or less, the oil-in-water emulsion containing from 0.5 to 35 mass% of an oily material, from 1 to 80 mass% of a readily water-soluble substance, from 5 to 70 mass% of water, and a protein material having properties described below in an amount of from 30 to 1200 mass% in terms of crude protein content relative to the oily material, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.
(2) The oil-in-water emulsion according to (1), wherein an NSI is 80 or more.
(3) The oil-in-water emulsion according to (1), wherein a total amount of the readily water-soluble substance and water is 2 times by mass or more an amount of the protein material.
(4) The oil-in-water emulsion according to (1), wherein the readily water-soluble substance has a solubility of 30 (g/100 g) or more in water and a higher boiling point than water.
(5) The oil-in-water emulsion according to (1), wherein a 0.5 mass% dispersion of the oily material in water has a transmittance (660 nm) of 50% or more.
(6) The oil-in-water emulsion according to (1), wherein a water content is 65 mass% or less.
(7) The oil-in-water emulsion according to any one of (1) to (6), containing no emulsifier.
(8) The oil-in-water emulsion according to (1), wherein an NSI is 80 or more; a total amount of the readily water-soluble substance and water is 2 times by mass or more an amount of the protein material; the readily water-soluble substance has a solubility of 30 (g/100 g) or more in water and a higher boiling point than water; a 0.5 mass% dispersion of the oily material in water has a transmittance (660 nm) of 50% or more; a water content is 65 mass% or less; and no emulsifier is contained.
(9) A method for producing an oil-in-water emulsion having an emulsion particle size of 100 nm or less, the method including mixing from 0.5 to 35 mass% of an oily material with a solution containing a protein material in an amount of from 30 to 1200 mass% in terms of crude protein content relative to the oily material, from 1 to 80 mass% of a readily water-soluble substance, and from 5 to 70 mass% of water; and applying a shear force to the mixture.
(10) The method for producing an oil-in-water emulsion according to (9), wherein an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30 to 95%; and the protein material has an NSI of 80 or more.
(11) The method for producing an oil-in-water emulsion according to (9), wherein a high-pressure emulsification apparatus is used for emulsification of an oil-in-water emulsion, and a pressure at the time of the emulsification is 50 MPa or more.
(12) The method for producing an oil-in-water emulsion according to (9), wherein no emulsifier is used.
(13) The method for producing an oil-in-water emulsion according to (9), wherein an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30 to 95%; the protein material has an NSI of 80 or more; a high-pressure emulsification apparatus is used for emulsification of an oil-in-water emulsion; a pressure at the time of the emulsification is 50 MPa or more; and no emulsifier is used.
(14) A method for producing an emulsion powder, the method including drying the oil-in-water emulsion described in any one of (9) to (13).

The present invention can also provide the following aspects.
(1) An oil-in-water emulsion having an emulsion particle size of 100 nm or less, the oil-in-water emulsion containing from 0.5 to 35 mass% of an oily material, from 1 to 80 mass% of a readily water-soluble substance, from 5 to 70 mass% of water, and a protein material having properties described below in an amount of from 30 to 1200 mass% in terms of crude protein content relative to the oily material, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.
(2) The oil-in-water emulsion according to (1), wherein an NSI is 80 or more.
(3) The oil-in-water emulsion according to (1) or (2), wherein a total amount of the readily water-soluble substance and water is 2 times by mass or more an amount of the protein material.
(4) The oil-in-water emulsion according to any one of (1) to (3), wherein the readily water-soluble substance has a solubility of 30 (g/100 g) or more in water and a higher boiling point than water.
(5) The oil-in-water emulsion according to any one of (1) to (4), wherein a 0.5 mass% dispersion of the oily material in water has a transmittance (660 nm) of 50% or more.
(6) The oil-in-water emulsion according to any one of (1) to (5), wherein a water content is 65 mass% or less.
(7) The oil-in-water emulsion according to any one of (1) to (6), containing no emulsifier.
(8) A method for producing an oil-in-water emulsion having an emulsion particle size of 100 nm or less, the method including mixing from 0.5 to 35 mass% of an oily material with a solution containing a protein material in an amount of from 30 to 1200 mass% in terms of crude protein content relative to the oily material, from 1 to 80 mass% of a readily water-soluble substance, and from 5 to 70 mass% of water; and applying a shear force to the mixture.
(9) The method for producing an oil-in-water emulsion according to (8), wherein an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30 to 95%; and the protein material has an NSI of 80 or more.
(10) The method for producing an oil-in-water emulsion according to (8) or (9), wherein a high-pressure emulsification apparatus is used for emulsification of an oil-in-water emulsion, and a pressure at the time of the emulsification is 50 MPa or more.
(11) The method for producing an oil-in-water emulsion according to any one of (8) to (10), wherein no emulsifier is used.
(12) A method for producing an emulsion powder, the method including drying the oil-in-water emulsion described in any one of (8) to (11).

### Description of Embodiments

The present invention will be described in detail below.

### Oily material

An oily material of the present invention refers to a substance that is insoluble or poorly soluble in water and easily soluble in neutral lipids. That is, examples thereof include triglycerides such as soybean oil, rapeseed oil, corn oil, safflower oil, rice oil, cottonseed oil, sunflower oil, sesame oil, olive oil, peanut oil, palm oil, palm kernel oil, coconut oil, lard, beef tallow, fish oil, and medium-chain fatty acid oil; products obtained by modifying these triglycerides by transesterification, hydrogenation, or the like; and fatty acids obtained by decomposing these triglycerides. The fatty acid also includes polyunsaturated fatty acid (eicosapentaenoic acid, docosahexaenoic acid, arachidonic acid and γ-linolenic acid and/or ethyl esters, for example) and the like. In order to obtain finer emulsion particles, an oily material having a melting point of 40°C or less is preferable, a triglyceride having the same melting point is more preferable, and a medium-chain fatty acid oil (MCT) is most preferable.

Although oil-soluble substances described below can be added for reasons such as imparting a physiological function, coloring, or flavoring, these substances have a boiling point higher than that of water. That is, natural perfume materials such as essential oils, extracts, oleoresins, recovered flavors, and isolated fragrances, fragrances obtained by mixing one or two or more selected from synthetic perfume materials such as alcohols, esters, aldehydes, ketones, and lactones, carotenoids and carotenoid derivatives (for example, α-carotene or β-carotene, 8'-apo-β-carotenal, 8'-apo-β-carotenoic acid ester), pigments such as flavonoids, turmeric, anato, anthocyanin, and tar dyes, fat-soluble vitamins such as vitamins A, D, E, and K, coenzyme Q10, and derivatives thereof (vitamin A ester and vitamin E ester, for example, vitamin A acetate and vitamin A palmitate, and tocopherol acetate); and antioxidants such as dibutylhydroxytoluene (BHT), butylhydroxyanisole (BHA), licorice oil extract, sesame oil unsaponifiable matter, γ-oryzanol, rapeseed oil extract, and L-ascorbic acid ester. However, the present invention is not limited thereto. Methanol, ethanol, isopropanol, propanol, acetone, methyl ethyl ketone, hexane, heptane, ethyl acetate, and the like are not applicable since they have a boiling point lower than that of water.

### Protein material

A protein material used in the present invention needs to have a low viscosity after heating. Specifically, the viscosity after heating can be measured as follows. An aqueous solution of the protein material is prepared so as to have a crude protein content of 20 mass%, the aqueous solution is heated at 80°C for 30 minutes, and then the viscosity of the aqueous solution is measured at 25°C. The viscosity after heating is 10000 mPa·s or less, preferably 5000 mPa·s or less, 1000 mPa·s or less, and 500 mPa·s or less, and more preferably 200 mPa·s or less, and 100 mPa·s or less.

The protein material requires a molecular weight of a certain size. The molecular weight is defined by a TCA solubility. In the present invention, the TCA solubility is defined by the ratio of the amount of crude protein dissolved in 0.22M TCA to the total crude protein content. The TCA solubility is from 30 to 95%, preferably from 35 to 90%, more preferably from 40 to 85% and from 50 to 80%. When the TCA solubility is too low, the viscosity after heating tends to increase, which is not suitable, and transmittance decreases. On the other hand, when the TCA solubility is too high, the amount of the protein contributing to emulsifiability decreases, and it is necessary to add a large amount of a protein material, so that a degree of freedom of formulation decreases, which is not preferable.

The present protein material preferably has an NSI (nitrogen solubility index) used as an index of protein solubility of 80 or more. More preferably, the protein material having an NSI of 85 or more, 90 or more, 95 or more, or 97 or more can be used. A high NSI of the protein material indicates high dispersibility in water and can contribute to dispersion stability of the oil-in-water emulsion composition of the present invention. The protein material with a too low NSI would tend to cause precipitation, which is not preferred. The crude protein content in the protein material is also preferably 30 mass% or more, more preferably 50 mass% or more, and most preferably 70 mass% or more. A protein material having a higher crude protein content can exhibit its function in a smaller amount.

Such a protein material is not generally commercially available, and can be obtained by a denaturation and molecular weight adjustment treatment and the like described later. Commercially available soybean protein materials such as FUJIPRO R, FUJIPRO 748, FUJIPRO CL, and HINUTE AM (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal protein include egg proteins containing ovalbumin, casein, whey, lactalbumin, milk proteins such as lactalbumin, proteins derived from blood such as plasma, serum albumin, and decolorized hemoglobin, proteins derived from meat, and proteins derived from fish and shellfish. In addition, proteins derived from microorganisms such as yeasts, molds and bacteria can be used. Even in a protein having poor solubility in water, a protein material that can be used in the present invention can be prepared by the treatment described below.

### Denaturation and molecular weight adjustment treatment

The protein material used in the oil-in-water emulsion of the present invention can be obtained by applying combination of "degradation/denaturation treatment" for degrading and/or denaturing a protein and "molecular weight distribution adjustment treatment" for adjusting molecular weight distribution of the protein. Examples of the "degradation/denaturation treatment" include pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combination of these. The order and number of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is obtained by the "degradation/denaturation treatment, the "molecular weight distribution adjustment treatment" need not be performed. When these treatments are combined and performed a plurality of times, all the treatments may be performed continuously from raw materials or may be performed at time intervals. For example, a commercially available product that has undergone a certain treatment may be used as a raw material to perform another treatment. As long as the above properties are satisfied, the specific protein material may be obtained by mixing a protein material that has undergone the molecular weight distribution adjustment treatment with a protein material that has not undergone the molecular weight distribution adjustment treatment. In this case, the ratio of the two (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the oil-in-water emulsion of the present aspect is composed of a protein material that has undergone the "degradation/denaturation and molecular weight distribution adjustment treatments".

The conditions of the treatment for degrading or denaturing a protein, for example, types and concentrations of an enzyme, pH, an organic solvent, a mineral, and the like, a temperature, a pressure, an output intensity, an electric current, and time, can be appropriately set by those skilled in the art. In the case of an enzyme, examples of the enzyme to be used include proteases that are classified into "metal proteases", "acidic proteases", "thiol proteases", and "serine proteases". The reaction can be carried out at a reaction temperature of from 20 to 80°C and preferably of from 40 to 60°C. In the case of pH adjustment treatment, the treatment can be performed in a pH range including any values of pH 2, 2.5, 3, 3.5, 4, 4.5, 5, 5.5, 6, 6.5, 7, 7.5, 8, 8.5, 9, 9.5, 10, 10.5, 11, 11.5, and 12 as the upper limit and the lower limit, for example, in a range of pH from 2 to 12. In the case of acid treatment, the method may be a method of adding an acid or a method of performing fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as fruit juice of lemon or the like, concentrated fruit juice, fermented milk, yogurt, or brewed vinegar. In the case of alkali treatment, an alkali, such as sodium hydroxide or potassium hydroxide, can be added. In the case of denaturant treatment, a denaturant, such as guanidine hydrochloride, urea, arginine, or PEG, may be added. In the case of heating or cooling treatment, examples of the heating temperature include ranges including any temperatures of 60°C, 70°C, 80°C, 90°C, 100°C, 110°C, 120°C, 125°C, 130°C, 135°C, 140°C, 145°C, and 150°C as the upper limit and the lower limit, for example, a range of from 60°C to 150°C. Examples of the cooling temperature include ranges including any temperatures of -10°C, -15°C, -20°C, -25°C, - 30°C, -35°C, -40°C, -45°C, -50°C, -55°C, -60°C, -65°C, -70°C, and -75°C as the upper limit and the lower limit, for example, a range of from -10°C to -75°C. Examples of the heating or cooling time include ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes as the upper limit and the lower limit, for example, a range of from 5 seconds to 200 minutes. In the case of high-pressure treatment, examples of the condition of the pressure include ranges including any pressures of 100 MPa, 200 MPa, 300 MPa, 400 MPa, 500 MPa, 600 MPa, 700 MPa, 800 MPa, 900 MPa, and 1000 MPa as the upper limit and the lower limit, for example, a range of from 100 MPa to 1000 MPa. In the case of organic solvent treatment, examples of the solvent to be used include alcohols and ketones, for example, ethanol and acetone. In the case of mineral addition treatment, examples of the mineral to be used include divalent metal ions, such as calcium and magnesium. In the case of supercritical treatment, the treatment can be performed, for example, using carbon dioxide in a supercritical state at a temperature of about 30°C or higher and a pressure of about 7 MPa or more. In the case of ultrasonic treatment, the treatment can be performed, for example, by irradiation with an output of from 100 to 1000 W at a frequency of from 100 KHz to 2 MHz. In the case of electrolysis treatment, for example, a protein aqueous solution can be treated by applying a voltage of from 100 mV to 1000 mV. In a specific embodiment, the treatment to degrade and/or denature a protein is selected from denaturant treatment, heating treatment, and combinations of those.

The conditions of the treatment for adjusting molecular weight distribution of a protein, for example, a type of filter medium, a carrier for gel filtration, the centrifugal rotation number, an electric current, and time, can be appropriately set by those skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

### Readily water-soluble substance

Although a continuous phase of the oil-in-water emulsion of the present invention is an aqueous solution of the above-described protein material, an amount of water at that time is preferably small. In order to reduce water in the aqueous solution, it is necessary to replace water with a readily water-soluble substance. The readily water-soluble substance used in the present invention has a solubility of 30 (g/100 g) or more, preferably 60 (g/100 g) or more, more preferably 100 (g/100 g) or more in water, and most preferably can be mixed and dissolved with water at an arbitrary ratio. The readily water-soluble substance has a boiling point higher than that of water. The substance is preferably an inorganic salt or an organic substance containing no nitrogen, and examples of the organic substance include a polyhydric alcohol containing a saccharide.

The polyhydric alcohol is a generic term for compounds having two or more hydroxyl groups in one molecule, and the type thereof is not particularly limited. Examples thereof include glycerin, propylene glycol, sorbitol, maltitol, xylitol, erythritol, lactitol, sorbitan, xylose, arabinose, mannose, trehalose, lactose, sugar, coupling sugar, glucose, enzyme starch syrup, acid saccharified starch syrup, maltose starch syrup, maltose, isomerized sugar, fructose, reduced maltose, reduced starch syrup, and honey. These may be used alone or in a combination of two or more types thereof.

Examples of the salts include chlorides, nitrates, sulfates, phosphates, and organic acid salts of monovalent or divalent metals such as sodium, potassium, calcium, and magnesium, or with ammonium, which satisfy the above solubility. Sodium chloride, ammonium sulfate, sodium dihydrogen phosphate, sodium lactate and the like can be exemplified.

### Emulsifier

In the present invention, it is not necessary to actively blend emulsifiers other than the protein materials described above. In particular, it may be undesirable in terms of quality to contain an emulsifier during an emulsification step.

Herein, those referred to as emulsifiers include synthetic emulsifiers and natural emulsifiers. Specific examples thereof include synthetic emulsifiers such as monoacylglycerol, diacylglycerol, polyglycerin fatty acid ester, sucrose fatty acid ester, sodium stearoyl lactate, calcium stearoyl lactate, polyoxyethylene derivative, fatty acid salt, and processed starch, derivatives of lecithin obtained by chemically or enzymatically treating naturally occurring lecithins such as enzymatically decomposed lecithin, hydrogenated enzymatically decomposed lecithin, hydroxylecithin, phosphatidylglycerol, phosphatidic acid, and acetylated lecithin, and naturally occurring saponins such as soybean saponin and quillajasaponin. Proteins that do not meet the requirements of the protein material described above, for example, milk casein, lactalbumin, and the like that have not been subjected to the treatment according to the present invention are also included in the emulsifier as long as they have emulsifiability.

### Blending ratio

The blending will be described below. Although an aqueous phase and an oil phase are separately prepared, finally the blending is performed at the following blending ratio so that the total amount is 100 parts by mass. While it is difficult to prepare an oil-in-water emulsion which is a nanoemulsion when it is out of the blending, it is possible to obtain an oil-in-water emulsion having a smaller particle size when the blending is preferable.

The amount of the oil phase is from 0.5 to 35 parts by mass, preferably from 1 to 30 parts by mass, and more preferably from 2 to 15 parts by mass in terms of an oily material.

The aqueous phase has the following composition. The amount of the protein material is from 30 to 1200 mass%, preferably from 60 to 400 mass% in terms of crude protein content relative to the oil and/or fat material. It is also preferable that the following conditions are satisfied as the crude protein content. The crude protein content is from 1 to 20 parts by mass, preferably from 5 to 15 parts by mass, and more preferably from 10 to 12 parts by mass based on 100 parts by mass of the total amount of the emulsion.

The amount of water is from 5 to 70 parts by mass, preferably 65 parts by mass or less, more preferably 35 parts by mass or less, and most preferably 20 parts by mass or less. The amount of the readily water-soluble substance is from 1 to 80 parts by mass, preferably from 10 to 70 parts by mass, and more preferably from 40 to 65 parts by mass. The total amount of the readily water-soluble substance and water is preferably 2 times by mass or more, more preferably 4 times by mass or more, and most preferably 6 times by mass or more, relative to the protein material.

In addition to the oily material, the protein material, and the readily water-soluble substance, various substances can be added as long as they do not affect the present invention. On the other hand, it is preferable that a substance having a boiling point lower than that of water, for example, a lower alcohol or a lower hydrocarbon is not contained. Considering the use for foods and the like, it is desirable to avoid these uses as much as possible.

Various emulsifiers dissolved in each of the aqueous phase and the oil phase may be added to the aqueous phase and the oil phase. However, as with lower alcohols, it is one of the characteristics of the present invention that an oil-in-water emulsions which is a nanoemulsion can be prepared without using these, and considering the use for foods and the like, it is desirable to avoid these uses as much as possible.

### Preparation of stock solution of emulsion

A preparation method will be described below, and first, the preparation of the aqueous phase will be described. The protein material and the readily water-soluble substance are added to water, and the aqueous phase is dissolved by stirring or the like. The temperature of water to be used is not particularly limited, and warm water is preferable, and from 60 to 80°C is suitable. When the temperature is low, the viscosity increases and workability deteriorates, and when the temperature is high, an oil-soluble component to be blended may deteriorate. The protein material used in the present invention is characterized by having a low viscosity after heating, and the aqueous phase prepared here also exhibits a low viscosity in spite of a high crude protein concentration.

Next, the preparation of the oil phase will be described. The oil phase is the oily material described above, and usually, only triglyceride or a mixture obtained by adding an oily material other than triglyceride such as the oil-soluble substance described above to triglyceride is used. Depending on the fatty acid or the like constituting also the oil phase, warming is preferred, and, in many cases, preparation is carried out at a temperature not lower than a melting point thereof.

### Emulsification apparatus

Two liquids of the aqueous phase and the oil phase are mixed. At this time, preliminary emulsification is preferably performed. The preliminary emulsification is to prepare an oil-in-water emulsion having a particle size of about from 10 to 100 µm by treating with a homomixer or the like. Although the rotation speed varies depending on the apparatus, for example, in the case of HOMOGENIZING MIXER MARK II Model 2.5 available from PRIMIX Corporation, processing at 8000 rpm for about 10 minutes can be exemplified.

Subsequently, main emulsification is performed. Although the emulsification is not particularly limited, an emulsification apparatus having a high shear force is preferable, and examples thereof include a homomixer, a colloid mill, a high-pressure homogenizer, an ultrahigh pressure homogenizer, and a vacuum emulsifier. Specifically, an APV Gaulin homogenizer (available from APV), a microfluidizer (available from Microfluidex International Corp.), an ultimizer (available from Sugino Machine Limited), a nanomizer (available from NANOMIZER Inc.) or the like can be preferably used.

It is preferable to perform emulsification at a pressure of 50 MPa or more using these high-pressure emulsification apparatuses. When a microfluidizer is exemplified, it is effective to perform shearing treatment twice or more, preferably four times or more, more preferably ten times or more, at pressures of preferably 100 MPa or more, more preferably 150 MPa or more.

In place of the homogenization treatment machine, for example, a homogenization treatment machine such as an ultrasonic emulsifier may be used. Examples thereof include ultrasonic homogenizers US-600, US-1200T, RUS-1200T, and MUS-1200T (all available from NISSEI Corporation), and ultrasonic processors UIP-2000, UIP-4000, UIP-8000, and UIP-16000 (all available from Hielscher GmbH). These high-power ultrasonic irradiators are used at a frequency of 25 kHz or less, preferably from 15 to 20 kHz.

### Particle size

When the emulsion of the present invention is added to water, the emulsion particle size is 100 nm or less, preferably 85 nm or less, and more preferably 60 nm or less. When the emulsion particle size is more than 100 nm, transparency is deteriorated, and therefore it is unsuitable for the present invention.

The emulsion of the present invention and its raw materials are evaluated by the following procedures.

### Water content

The water content is determined by an ordinary pressure heating loss method (105°C 12 hours).

### Crude protein content

The crude protein content is measured by the Kjeldahl method. Specifically, the mass of nitrogen measured by the Kjeldahl method relative to the weight of a protein material is represented by "mass%" as a crude protein content of the dried product. The nitrogen conversion coefficient is 6.25. Basically, the value is calculated by rounding the value of the second decimal place.

### NSI

60 ml of water is added to 3 g of a sample, followed by propeller stirring at 37°C for 1 hour and centrifugation at 1400 × g for 10 minutes to collect a supernatant (I). Next, 100 ml of water is again added to the remaining precipitate, and the mixture is again stirred with a propeller at 37°C for 1 hour and then centrifuged to collect a supernatant (II). The supernatants (I) and (II) are combined, and water is added to the mixed liquid to make it 250 ml. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen recovered as the filtrate (water-soluble nitrogen) to the total amount of nitrogen in the sample is expressed in mass% and is defined as the NSI. Basically, the value is calculated by rounding the value of the second decimal place.

### TCA solubility

To a 2 mass% aqueous solution of a protein material, 0.44 M trichloroacetic acid (TCA) is added in an equal amount to prepare a 0.22 M TCA solution, and a TCA solubility is a value obtained by measuring the ratio of soluble nitrogen by the Kjeldahl method. Basically, the value is calculated by rounding the value of the second decimal place.

### Viscosity (viscosity after heating)

The viscosity of the protein material is measured using a B-type viscometer (Type BM available from TOKISANGYO). An aqueous protein material solution is prepared so as to have a crude protein content of 20 mass%, and charged in a measurement container, a rotor is set, and the container is sealed, and then heated at 80°C for 30 minutes in a hot water bath. Next, the viscosity is measured at an arbitrary rotation speed at 25°C, the pointer value is read, and the viscosity is calculated by multiplying a rotor No. and a conversion multiplier corresponding to the rotation speed. (Unit: Pa·s) The measured value after 1 minute is used. Basically, the rotation speed is set to 60 rpm. For a sample having a high viscosity, the rotor No. is changed from 1 to 4, and the rotation speed is decreased to 6 rpm. A measurement upper limit viscosity in this measurement is 100000 mPa s. When the rotor No. 4 and the rotation speed of 6 rpm exceed the measurement range, the viscosity after heating is immediately determined to be 100000 mPa s or more.

### Emulsion particle size

The emulsion is diluted with water so that the oily material is 0.03 mass% to prepare a sample. A z-average particle size (z-average size) is measured at 25°C with a zetasizer nano-zs available from Malvern Instruments.

### Transparency

The emulsion is diluted with water so that the oily material is 0.5 mass% to prepare a sample. A transmittance T (%) is measured at a wavelength of 660 nm using a quartz cell having an optical path of 1 cm with UV-1900 available from Shimadzu Corporation. In the present invention, a transmittance of 50% or more is defined as transparent.

### Application

The oil-in-water emulsion of an emulsion formulation according to the present invention can be applied to all processed foods, beverages and health foods to which addition of an oily substance is desired.

### Physiological function enhancement

Examples of the oil-soluble functional substance having a physiological function include plant sterol and plant estrogen in addition to the fat-soluble vitamins described above, pigments such as carotenoid, and polyunsaturated fatty acids. By applying these to the oil-in-water emulsion which is the nanoemulsion according to the present invention, absorbability of the oil-soluble physiological functional substance can be suitably improved, and these physiological functional effects can be enhanced. Examples of the object to be added include the following foods:
instant noodles, retort foods, instant foods such as instant soybean soup, Japanese style clear soup, and soup, preferred beverages such as carbonated beverages, fruit juice beverages, vegetable beverages, coffee beverages, sports beverages, tea-based beverages, and alcoholic beverages, flour products such as bread, pasta, noodles, and cake mix, confectioneries such as candies, chewing gum, chocolate, biscuits, snacks, Japanese confectionery, rice confectionery, and desserts, condiments such as sauces, curry roux, sauces/broths, and dressings, oil and/or fat foods such as butter, mayonnaise, and margarine, dairy products such as processed milk, milk beverages, yogurts, lactic acid bacteria beverages, cheese, ice cream, and cream, frozen foods, fish paste products, ham and sausages, jams and marmaleads, pickled vegetables, and canned foods.

### Transparency

In the present invention, the oily material is dispersed in a water system in a transparent manner, so that it is possible to improve a commercial value of a food product for which transparency is desired. Examples of the oily material to be dispersed include the above-described perfumes and pigments such as carotenoids.

Examples of foods to which this effect can be suitably applied include instant foods such as instant Japanese style clear soup and soup, preferred beverages such as carbonated beverages, fruit juice beverages, vegetable beverages, coffee beverages, sports beverages, tea-based beverages, and alcoholic beverages, confectionery such as candies, chewing gum, Japanese confectionery, and desserts, seasonings such as sauces/broths and dressings, frozen confectionery, and jam and marmalade; however, the present invention is not limited thereto.

### Imparting kokumi taste

Some conditions of the present invention can strongly impart the effect of enhancing a kokumi taste due to the inclusion of oil and/or fat to food. The kokumi taste referred to herein is a sense of volume or a sense of richness that is felt after food is put into the oral cavity and then swallowed, and the kokumi taste can be slightly felt even when the emulsion formulation is diluted with water; however, the oil-in-water emulsion which is the nanoemulsion according to the present invention can be used to exhibit the kokumi taste very strongly.

In particular, in recent years, from the viewpoint of health, in foods containing a large amount of oil and/or fat, it is desired to reduce the amount of oil and/or fat blended in order to reduce the intake calories and the intake of oil and/or fat; however, reducing the amount of oil and/or fat blended reduces the kokumi taste and impairs the taste. According to the present invention, the amount of oil and/or fat blended can be reduced while maintaining the taste (kokumi taste).

Examples of foods to which this effect can be suitably applied include instant foods such as instant noodles, retort foods, and soups; flour products such as breads, pastas, noodles, and cake mixes; confectioneries such as chocolates, biscuits, snacks, and desserts; seasonings such as sauces, curry roux, and dressings; oil-and-fat foods such as butters, mayonnaises, and margarines; processed milk; milk beverages; yogurts; lactic acid bacteria beverages; dairy products such as cheeses, ice creams, and creams; frozen foods; fish paste products; hams and sausages; and canned foods; however, the present invention is not limited thereto.

When an emulsifying agent using an emulsifier is used as in a known case, it is not suitable because bitterness, astringency, and miscellaneous taste derived from the emulsifier are simultaneously imparted.

In a certain embodiment, the present invention can have a water activity of 0.4 or less and can significantly improve storability of a solubilized nanoemulsion. Specifically, the water activity can be reduced by reducing the amount of water and increasing the amount of the readily water-soluble substance. As the readily water-soluble substance, addition of glycerin, sorbitol, fructose, sucrose, or the like is effective, and the water content at this time is preferably 20 mass% or less, and more preferably 10 mass% or less.

In a certain embodiment, the present invention can be powderized and expand a range of use of a solubilized nanoemulsion. Specifically, the oil-in-water emulsion which is the nanoemulsion described above can be dried and powdered as is or after dilution and/or addition of other substances. Examples of the other substances include carbohydrates such as dextrin and cellulose, protein materials, peptides, amino acids, and salts. Examples of the powdering include spray drying, freeze drying, and drying under reduced pressure.

The dried product of the present invention is dissolved in a solvent such as water to become an oil-in-water emulsion again, and it is also possible to maintain a nanoemulsion having an emulsion particle size of 100 nm or less.

### Examples

Next, the present invention will be described in more detail with reference to Examples, but is not limited to only such Examples. In the following description, "parts" and "%" are "parts by mass" and "mass%", respectively, unless otherwise specified.

### Oily material

As the oily material, "oil and/or fat" containing triglyceride as a main component were taken as oils and/or fats A to F, and the following oils and/or fats are used after melting.
Oil and/or fat A: rapeseed oil (salad oil for confectionary, available from Fuji Oil Co., Ltd.)
Oil and/or fat B: medium-chain fatty acid triglyceride (MCT-64, available from Fuji Oil Co., Ltd.)
Oil and/or fat C: palm olein (Palm Ace N, available from Fuji Oil Co., Ltd.)
Oil and/or fat D: coconut oil (commercially refined coconut oil (melting point: 24°C), available from Fuji Oil Co., Ltd.)
Oil and/or fat E: cocoa butter (cocoa butter 201 (melting point 33°C), available from Fuji Oil Co., Ltd.)
Oil and/or fat F: fully hydrogenated high erucic acid rapeseed oil (hydrogenated high erucic acid rapeseed oil (melting point: 61°C), available from Yokozeki Oil & Fat Industries Co., Ltd.)
Oil and/or fat G: DHA/EPA-containing algae oil (DHA Algal Oil (DHA content 380 m/g or more), available from BASF)

As oily materials other than the oils and/or fats described above, oil-soluble substances A to D were used.
Oil-soluble substance A: vitamin E preparation (EMix 70 L (68.0% or more as total tocopherol), available from TAMA BIOCHEMICAL CO., LTD.)
Oil-soluble substance B: oil and/or fat containing 10% of β-carotene. 10 parts by mass of a 30% β-carotene suspension (30% β-carotene suspension, available from DSM Nutritional Products) and 20 parts by mass of a medium-chain fatty acid triglyceride were mixed, and heated at 120°C for 10 minutes under a nitrogen atmosphere to use the mixture as a non-turbid mixed solution containing 10% of β-carotene.
Oil-soluble substance C: oil and/or fat containing 50% d-limonene. 10 parts by mass of d-limonene ((R)-(+) -limonene (purity: 95.0+%), available from FUJIFILM Wako Pure Chemical Corporation) and 10 parts by mass of medium-chain fatty acid triglyceride were mixed.
Oil-soluble substance D: oleic acid (Lunac O-V, available from Kao Corporation)

### Protein material

The following materials were used as protein materials.
Soybean protein material A: product obtained by degradation/denaturation and molecular weight distribution adjustment treatment of separated soybean protein. (Test product, Fuji Oil Co., Ltd., water content: 1.2%, crude protein content: 79.3%, TCA solubility: 61.8%, viscosity after heating: 28 mPa·s, NSI: 98.1), raw material separated soybean protein: FUJIPRO R (available from Fuji Oil Co., Ltd., crude protein content: 87.2%, TCA solubility: 3.2%)
Pea protein material A: product obtained by degradation/denaturation and molecular weight distribution adjustment treatment of pea protein. (Test product, Fuji Oil Co., Ltd., water content: 1.1%, crude protein content: 72.4%, TCA solubility: 45.9%, viscosity after heating: 43 mPa·s, NSI: 98.9), raw material pea protein: PP-CS (available from ORGANO FOODTECH CORPORATION, crude protein content: 79.1%)
Almond protein material A: product obtained by degradation/denaturation treatment of almond protein (test product, Fuji Oil Co., Ltd., water content: 1.2%, crude protein content: 52.8%, TCA solubility: 55.8%, viscosity after heating: 325 mPa·s, NSI: 92.3), raw material almond milk powder: PP-CS (crude protein content: 28.8%, available from TSUKUBA DAIRY PRODUCTS CO., LTD.)
Wheat protein material A: product obtained by degradation/denaturation treatment of wheat protein (test product, Fuji Oil Co., Ltd., water content: 1.2%, crude protein content: 40.1%, TCA solubility: 50.4%, viscosity after heating: 355 mPa·s, NSI: 96.7), raw material powdery wheat protein: V-75 (available from GLICO NUTRITION CO., LTD., crude protein content: 71.8%)
Whey protein material A: product obtained by degradation/denaturation treatment of whey protein (test product, Fuji Oil Co., Ltd., water content: 1.1%, crude protein content: 56.8%, TCA solubility: 58.2%, viscosity after heating: 145 mPa·s, NSI: 99.6), raw material whey protein: WPC80 (available from Warrnambool Cheese & Butter Pty Lftd., crude protein content 78.9%)
Albumen protein material A: product obtained by degradation/denaturation treatment of albumen (test product, Fuji Oil Co., Ltd., water content: 1.0%, crude protein content: 41.4%, TCA solubility: 84.3%, viscosity after heating: 250 mPa·s, NSI: 99.2), raw material dry albumen (dry albumen K, available from Zen-noh Kewpie Egg-station Co., Ltd., crude protein content: 94.0%)
Microorganism-derived protein material A: product obtained by degradation/denaturation treatment of microorganism-derived protein (test product, Fuji Oil Co., Ltd., water content: 1.2%, crude protein content: 43.9%, TCA solubility: 82.3%, viscosity after heating: 317 mPa·s, NSI: 98.5), raw material lipase preparation (available from Amano Enzyme Inc., crude protein content: 94.0%)

As other protein materials, the following were used.

Soy protein material B (FUJIPRO R, available from Fuji Oil Co., Ltd., crude protein content: 87.2%, TCA solubility: 3.2%, viscosity after heating: 100000 mPa·s or more, NSI: 81.2)

A soy protein material C (FUJIPRO 748, available from Fuji Oil Co., Ltd., crude protein content: 86.1%, TCA solubility: 9.8%, viscosity after heating: 100000 mPa·s or more, NSI: 94.5) was used.

A soybean protein material D (FUJIPRO-CL, available from Fuji Oil Co., Ltd., crude protein content: 88.0%, TCA solubility: 23.0%, viscosity after heating: 100000 mPa·s or more, NSI: 65.0) was used.

A soybean protein material E (HINUTE AM, available from Fuji Oil Co., Ltd., crude protein content: 90.0%, TCA solubility: 100.0%, viscosity after heating: 20 mPa·s, NSI: 100) was used.

A pea protein material B (PP-CS, available from ORGANO FOODTECH CORPORATION, crude protein content: 79.1%, TCA solubility: 0.0%, viscosity after heating: 100000 mPa·s or more, NSI 87.3) was used.

Sodium caseinate (Sodium Caseinate 180, available from Fonterra Co-operative Group Limited, crude protein content: 92.3%, TCA solubility: 0.0%, viscosity after heating: 100000 mPa·s or more, NSI 98.1) was used.

A whey protein material B (WPC80, available from Warrnambool Cheese & Butter Pty Ltd., crude protein content: 78.9%, TCA solubility: 0.0%, viscosity after heating: 100000 mPa·s or more, NSI 98.2) was used.

### Method for preparing oil-in-water emulsion

The oil-in-water emulsion as a nanoemulsion was prepared as follows. That is:
a) Each protein material, readily water-soluble substance, and water were dissolved in water having a temperature of 65°C in the formulation shown in Table 1, and the aqueous phase was prepared using a homomixer (HOMOGENIZING MIXER MARK II Model 2.5, available from PRIMIX Corporation).
b) An oily material was added to the aqueous phase of step a) in the formulation shown in Table 1, and the mixture was preliminarily emulsified at 65°C for 5 minutes to an emulsion particle size of from 10 to 60 um using a homomixer.
c) An oil-in-water emulsion as a nanoemulsion was prepared by treating the mixture in step b) with a high pressure homogenizer (Microfluidizer available from Microfluidics

### International Corporation) at a predetermined pressure.

As the readily water-soluble substance, the following were used: glycerin (food additive, available from Kishida Chemical Co., Ltd., solubility in water: arbitrary, boiling point: 290°C), sorbitol (available from B Food Science Co., Ltd., solubility in water: arbitrary, boiling point 296°C), maltose ("Sunmalt" available from Hayashibara Co., Ltd., solubility in water: 1.08 g/ml·20°C, no boiling point data), sodium chloride (available from FUJIFILM Wako Pure Chemical Corporation, solubility in water: 35.9 g/100 g·25°C, boiling point: 1413°C), sodium L-ascorbate (available from FUJIFILM Wako Pure Chemical Corporation, solubility in water: 62 g/100 ml·25°C, boiling point: 235°C).

### Measurement of emulsion particle size

A sample oil-in-water emulsion was diluted with ion-exchanged water so that the oily material was 0.03%. The particle size of an oil droplet in water was measured as Z-average (nm) to be calculated by Zetasizer nano-ZS (MODEL ZEN3600) available from Malvern Instruments. The measurement was performed three times at 25°C using 2 g of a sample in a glass cell having an optical path of 1 cm, and the average value thereof was taken as an average emulsion particle size. The setting conditions were as follows.

RI (Material) 1.47, Absorption (Material) 0, Temperature (Dispersant) 25 (°C), Viscosity (Dispersant) 0.887 (cp), RI (Dispersant) 1.33, Equilobration time 60 (sec), Number of runs 10, Run duration 10, Number of measurements 1, Dela between measurements 0 (sec).

### Study on blending of water and readily water-soluble substance

In order to confirm the blending amounts of water and the readily water-soluble substance and the properties of the emulsion, the following studies were conducted, and the results were summarized in Table 1. The emulsion particle size was evaluated according to the following criteria. Those having a particle size of 100 nm or less were regarded as acceptable, and these had a transmittance of more than 50%. 4 points: very good when particle size is 50 nm or less, 3 points: good when particle size is 60 nm or less, 2 points: acceptable range when particle size is 100 nm or less, 1 point: unacceptable when particle size exceeds 100 nm.

**(Table 1) Study on blending of water and readily water-soluble substance**

| | (mass%) | Comparative Example 1 | Example 1 | Example 2 | Example 3 | Example 4 | Example 5 | Example 6 | Example 7 | Example 8 | Example 9 | Example 10 | Example 5 | Example 11 | Example 12 | Example 13 | Comparative Example 2 |
|---|---|---|---|---|---|---|---|---|---|---|---|---|---|---|---|---|---|
| Formulation | Oil and/or fat A (rapeseed oil) | 12.5 | ← | ← | ← | ← | ← | ← | ← | 1.0 | 3.0 | 7.0 | 12.5 | 16.0 | 20.0 | 27.0 | 40.0 |
| | Soybean protein material A | 14.0 | ← | ← | ← | ← | ← | ← | ← | ← | ← | ← | ← | ← | ← | ← | ← |
| | Glycerin | 0.0 | 13.5 | 23.5 | 33.5 | 43.5 | 55.5 | 60.0 | 64.5 | 67.0 | 65.0 | 61.0 | 55.5 | 52.0 | 48.0 | 41.0 | 28.0 |
| | Water | 73.5 | 60.0 | 50.0 | 40.0 | 30.0 | 18.0 | 13.5 | 9.0 | 18.0 | ← | ← | ← | ← | ← | ← | ← |
| | Total | 100.0 | ← | ← | ← | ← | ← | ← | ← | ← | ← | ← | ← | ← | ← | ← | ← |
| Composition | Crude protein content (%) | 11.1 | ← | ← | ← | ← | ← | ← | ← | ← | ← | ← | ← | ← | ← | ← | ← |
| | Crude protein content/oil and/or fat ratio (%) | 89 | ← | ← | ← | ← | ← | ← | ← | 1,111 | 370 | 159 | 89 | 69 | 56 | 41 | 28 |
| Conditions | Emulsification pressure (Mpa) | 150 | ← | ← | ← | ← | ← | ← | ← | ← | ← | ← | ← | ← | ← | ← | ← |
| | Path number | 5 | ← | ← | ← | ← | ← | ← | ← | ← | ← | ← | ← | ← | ← | ← | ← |
| Evaluation | Emulsion particle size (nm) | 115.0 | 95.0 | 77.0 | 66.0 | 57.0 | 53.0 | 58.2 | 51.0 | 61.0 | 58.0 | 54.0 | 53.0 | 62.0 | 70.0 | 85.1 | 122.1 |
| | Transmittance (T%) | 28.9 | 50.2 | 66.6 | 75.8 | 80.4 | 83.9 | 80.0 | 85.0 | 76.5 | 79.4 | 83.9 | 83.9 | 76.6 | 63.4 | 51.1 | 14.3 |
| | Evaluation | 1 | 2 | 2 | 2 | 3 | 3 | 3 | 3 | 2 | 3 | 3 | 3 | 2 | 2 | 2 | 1 |

An acceptable quality was obtained by using the soybean protein material A in Examples 1 to 7 and adjusting the water content to 60% or less and the glycerin content to 13.5% or more. In Examples 4 to 7, the particle size was less than 60 nm, and the quality was particularly good.

In Examples 8 to 13, the acceptable quality was obtained when an oily material blending amount was 27% or less. In Examples 9 and 10, the particle size was less than 60 nm, and the quality was particularly good.

As described above, according to the present invention, an emulsion having an emulsion particle size of 100 nm or less and high transparency was obtained even with a high oil content. The water activity of Example 6 was 0.39, and the water activity of Example 5 was 0.31, which were very low. A water activity value (Aw) was measured with a water activity measuring device TH200 (available from Novasina AG).

### Study on protein material formulation

In order to confirm the blending amount of the protein material and the properties of the emulsion, the following studies were conducted, and the results were summarized in Table 2. In Examples 14 to 18, the acceptable quality was obtained by blending the soybean protein material A so that the crude protein content was 4% or more. In Examples 14 and 15, the particle size was less than 60 nm, and the quality was particularly good.

**(Table 2) Study on protein material formulation**

| | (mass%) | Example 5 | Example 14 | Example 15 | Example 16 | Example 17 | Example 18 | Comparative Example 3 | Comparative Example 4 | Comparative Example 5 |
|---|---|---|---|---|---|---|---|---|---|---|
| Formulation | Oil and/or fat A (rapeseed oil) | 12.5 | ← | ← | ← | ← | ← | ← | ← | ← |
| | Soybean protein material A | 14.0 | 12.0 | 10.0 | 8.0 | 6.0 | 5.0 | 4.0 | 2.0 | 1.0 |
| | Glycerin | 55.5 | 57.5 | 59.5 | 61.5 | 63.5 | 64.5 | 65.5 | 67.5 | 68.5 |
| | Water | 18.0 | ← | ← | ← | ← | ← | ← | ← | ← |
| | Total | 100.0 | ← | ← | ← | ← | ← | ← | ← | ← |
| Composition | Crude protein content (%) | 11.1 | 9.5 | 7.9 | 6.3 | 4.8 | 4.0 | 3.2 | 1.6 | 0.8 |
| | Crude protein content/oil and/or fat ratio (%) | 89 | 76 | 63 | 51 | 38 | 32 | 25 | 13 | 6 |
| Conditions | Emulsification pressure (Mpa) | 150 | ← | ← | ← | ← | ← | ← | ← | ← |
| | Path number | 5 | ← | ← | ← | ← | ← | ← | ← | ← |
| Evaluation | Emulsion particle size (nm) | 53.0 | 59.0 | 58.2 | 73.1 | 76.8 | 82.7 | 100.1 | 149.2 | 178.8 |
| | Transmittance (T%) | 83.9 | 78.5 | 79.4 | 66.5 | 59.6 | 51.1 | 35.8 | 0.1 | 0.0 |
| | Evaluation | 3 | 3 | 3 | 2 | 2 | 2 | 1 | 1 | 1 |

### Study on processing conditions

In order to confirm the path number and the emulsion pressure of the emulsification treatment and the properties of the emulsion, the following study was performed, and the results were summarized in Table 3.

**(Table 3) Study of treatment condition**

| | (mass%) | Comparative Example 6 | Example 19 | Example 20 | Example 21 | Example 5 | Example 22 | Comparative Example 7 | Comparative Example 8 | Example 23 | Example 24 | Example 5 | Example 25 |
|---|---|---|---|---|---|---|---|---|---|---|---|---|---|
| Formulation | Oil and/or fat A (rapeseed oil) | 12.5 | ← | ← | ← | ← | ← | ← | ← | ← | ← | ← | ← |
| | Soybean protein material A | 14.0 | ← | ← | ← | ← | ← | ← | ← | ← | ← | ← | ← |
| | Glycerin | 55.5 | ← | ← | ← | ← | ← | ← | ← | ← | ← | ← | ← |
| | Glycerin | 55.5 | ← | ← | ← | ← | ← | ← | ← | ← | ← | ← | ← |
| | Total | 100.0 | ← | ← | ← | ← | ← | ← | ← | ← | ← | ← | ← |
| Composition | Crude protein content (%) | 11.1 | ← | ← | ← | ← | ← | ← | ← | ← | ← | ← | ← |
| | Crude protein content/oil and/or fat ratio (%) | 89 | ← | ← | ← | ← | ← | ← | ← | ← | ← | ← | ← |
| Conditions | Emulsification pressure (Mpa) | 150 | 150 | 150 | 150 | 150 | 180 | 30 | 50 | 50 | 100 | 150 | 180 |
| | Path number | 1 | 2 | 3 | 4 | 5 | 20 | 5 | 5 | 12 | 5 | 5 | 5 |
| Evaluation | Emulsion particle size (nm) | 128.1 | 73.0 | 62.9 | 57.7 | 58.2 | 41.2 | 158.2 | 115.1 | 86.0 | 75.4 | 58.2 | 56.5 |
| | Transmittance (T%) | 10.0 | 59.7 | 70.3 | 80.0 | 80.0 | 86.1 | 0.2 | 21.2 | 50.5 | 67.3 | 80.0 | 80.2 |
| | Evaluation | 1 | 2 | 2 | 3 | 3 | 4 | 1 | 1 | 2 | 2 | 3 | 3 |

In Examples 19 to 22, the acceptable quality was obtained by two or more paths of high-pressure emulsification treatment at 150 MPa. In Examples 21 and 22, the particle size was less than 60 nm, and the quality was particularly good. In Examples 23 to 25, the acceptable quality was obtained by high-pressure emulsification treatment at 50 MPa or more. In Example 25, the particle size was less than 60 nm, and the quality was particularly good.

As described above, when the microfluidizer was used in the present invention, it was necessary to perform the high-pressure emulsification treatment at least at 50 MPa or more.

### Study on oily material formulation

In order to confirm the blending amount of the oily material to be added and the properties of the emulsion, the following examination was conducted, and the results were summarized in Table 4.

**(Table 4) Study on oily material formulation**

| | (mass%) | Melting point (°C) | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|
| Formulation | Oil and/or fat A | Liquid oil | 12.5 | | | | | | | | | | |
| | Oil and/or fat B | Liquid oil | | 12.5 | | | | | | | | | |
| | Oil and/or fat C | Liquid oil | | | 12.5 | | | | | | | | |
| | Oil and/or fat D | 24 | | | | 12.5 | | | | | | | |
| | Oil and/or fat E | 33 | | | | | 12.5 | | | | | | |
| | Oil and/or fat F | 61 | | | | | | 12.5 | | | | | |
| | Oil and/or fat G | Liquid oil | | | | | | | 12.5 | | | | |
| | Oily material A | Liquid oil | | | | | | | | 12.5 | | | |
| | Oily material B | Liquid oil | | | | | | | | | 12.5 | | |
| | Oily material C | Liquid oil | | | | | | | | | | 12.5 | |
| | Oily material D | Liquid oil | | | | | | | | | | | 12.5 |
| | Soybean protein material A | | 14.0 | ← | ← | ← | ← | ← | ← | ← | ← | ← | ← |
| | Glycerin | | 55.5 | ← | ← | ← | ← | ← | ← | ← | ← | ← | ← |
| | Water | | 18.0 | ← | ← | ← | ← | ← | ← | ← | ← | ← | ← |
| | Total | | 100.0 | ← | ← | ← | ← | ← | ← | ← | ← | ← | ← |
| Composition | Crude protein content (%) | | 11.1 | ← | ← | ← | ← | ← | ← | ← | ← | ← | ← |
| | Crude protein content/oil and/or fat ratio (%) | | 89 | ← | ← | ← | ← | ← | ← | ← | ← | ← | ← |
| Conditions | Emulsification pressure (Mpa) | | 180 | 150 | ← | ← | ← | ← | ← | ← | ← | ← | ← |
| | Path number | | 5 | ← | ← | ← | ← | ← | ← | ← | ← | ← | ← |
| Evaluation | Emulsion particle size (nm) | | 56.5 | 57.0 | 57.0 | 57.0 | 55.0 | 65.0 | 50.0 | 68.6 | 48.5 | 54.6 | 66.0 |
| | Transmittance (T%) | | 80.2 | 87.7 | 82.3 | 81.2 | 83.9 | 70.2 | 82.4 | 66.0 | 79.7 | 76.5 | 72.5 |
| | Evaluation | | 3 | 3 | 3 | 3 | 3 | 2 | 3 | 2 | 4 | 3 | 2 |

In Examples 26 to 35, the acceptable quality was obtained regardless of a normal temperature solid oil and/or fat and fatty acid chain length. However, in Example 30, the particle size is slightly large, and this is considered to be caused by a work problem due to the high melting point. As for the oil-soluble substance, the acceptable qualities were obtained even when an antioxidant component was used in Example 32, a pigment/physiologically active substance was used in Example 33, and a perfume component was used in Examples 34 and 35.

From the above, it has been found that the present invention can obtain an emulsion having an emulsion particle size of 100 nm or less and high transparency regardless of the material as long as it is oil-soluble.

### Study on formulation of other protein materials

In order to confirm the blending amounts of other protein materials and the properties of the emulsion, the following studies were conducted, and the results were summarized in Table 5.

**(Table 5) Blending amount of other protein materials**

| | (mass%) | CP (%) | TCA (%) | Viscosity* (mPa·s) | NSI | Example 5 | Example 36 | Example 37 | Example 38 | Example 39 | Example 40 | Example 41 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|---|---|---|---|---|---|---|---|---|
| Formulation | Oil and/or fat A | | | | | 12.5 | 12.5 | 7.0 | 5.0 | 12.5 | 5.0 | 5.0 | 3.0 | 7.0 | 12.5 | 7.0 | 3.0 | 12.5 | 12.5 |
| | Soybean protein material A | 80.3 | 61.8 | 28 | 98.1 | 14.0 | | | | | | | | | | | | | |
| | Pea protein material A | 73.2 | 45.9 | 43 | 98.9 | | 14.0 | | | | | | | | | | | | |
| | Almond protein material A | 53.4 | 55.8 | 325 | 92.3 | | | 20.0 | | | | | | | | | | | |
| | Wheat protein material A | 40.6 | 50.4 | 355 | 96.7 | | | | 26.5 | | | | | | | | | | |
| | Whey protein material A | 57.4 | 58.2 | 145 | 99.6 | | | | | 18.5 | | | | | | | | | |
| | Albumen protein material A | 41.8 | 84.3 | 250 | 99.2 | | | | | | 26.0 | | | | | | | | |
| | Microorganism-derived protein material A | 44.4 | 82.3 | 317 | 98.5 | | | | | | | 24.0 | | | | | | | |
| | Soybean protein material B | 90.4 | 3.2 | > 100000 | 81.2 | | | | | | | | 5.0 | | | | | | |
| | Soybean protein material C | 90.4 | 9.8 | > 100000 | 94.5 | | | | | | | | | 10.0 | | | | | |
| | Soybean protein material D | 91.1 | 23.0 | > 100000 | 65.0 | | | | | | | | | | 14.0 | | | | |
| | Soybean protein material E | 92.1 | 100 | 20.0 | 100 | | | | | | | | | | | 14.0 | | | |
| | Pea protein material B | 82.0 | 0 | > 100000 | 87.3 | | | | | | | | | | | | 5.0 | | |
| | Sodium caseinate | 96.4 | 0 | > 100000 | 98.1 | | | | | | | | | | | | | 14.0 | |
| | Whey protein material B | 81.3 | 0 | > 100000 | 98.2 | | | | | | | | | | | | | | 14.0 |
| | Glycerin | | | | | 55.5 | ← | 42.5 | 36.0 | 44.0 | 36.5 | 33.5 | 55.5 | ← | ← | ← | ← | ← | ← |
| | Water | | | | | 18.0 | 18.0 | 30.5 | 32.5 | 25.0 | 32.5 | 37.5 | 36.5 | 27.5 | 18.0 | 23.5 | 36.5 | 18.0 | 18.0 |
| | Total | | | | | 100.0 | ← | ← | ← | ← | ← | ← | ← | ← | ← | ← | ← | ← | ← |
| Composition | Crude protein content (%) | | | | | 11.1 | 10.1 | 10.6 | 10.6 | 10.5 | 10.8 | 10.5 | 4.4 | 8.6 | 12.3 | 12.6 | 4.0 | 12.9 | 11.0 |
| | Crude protein content/oil and/or fat ratio (%) | | | | | 89 | 81 | 151 | 213 | 84 | 215 | 211 | 145 | 123 | 99 | 180 | 132 | 103 | 88 |
| Conditions | Emulsification pressure (Mpa) | | | | | 150 | ← | ← | ← | ← | ← | ← | ← | ← | ← | ← | ← | ← | ← |
| | Path number | | | | | 5 | ← | ← | ← | ← | ← | ← | ← | ← | ← | ← | ← | ← | ← |
| Evaluation | Emulsion particle size (nm) | | | | | 53.0 | 77.2 | 55.5 | 51.2 | 72.4 | 57.9 | 52.3 | 135.0 | 151.0 | 214.0 | 83984 | 128.0 | 151.4 | 165.3 |
| | Transmittance (T%) | | | | | 83.9 | 58.9 | 80.9 | 79.3 | 79.5 | 71.2 | 80.8 | 2.0 | 0.1 | 0.2 | 14.3 | 3.4 | 21.9 | 13.2 |
| | Evaluation | | | | | 3 | 2 | 3 | 3 | 2 | 3 | 3 | 1 | 1 | 1 | 1 | 1 | 1 | 1 |

| | | | | | | | | | | | | | | | | | | | |
|---|---|---|---|---|---|---|---|---|---|---|---|---|---|---|---|---|---|---|---|
| *Viscosity after heating | | | | | | | | | | | | | | | | | | | |

From Examples 36 to 41, it was found that an emulsion having an emulsion particle size of 100 nm or less and high transparency was obtained by using a specific protein material 2 satisfying the requirements of the TCA solubility and viscosity described above. On the other hand, from Comparative Examples 9 to 15, it was found that in the known protein material, an emulsion having an emulsion particle size of 100 nm or less and high transparency was not obtained.

### Study on readily water-soluble substance

In order to confirm the blending amounts of other readily water-soluble substances and the properties of the emulsion, the following studies were conducted, and the results were summarized in Table 6.

From Examples 42 to 43, it was found that polyhydric alcohols such as sorbitol and maltose were widely used in the present invention in addition to glycerin. From Examples 44 to 45, it was found that inorganic salts and organic acid salts also had the same effect.

**(Table 6) Study on readily water-soluble substance**

| | (mass%) | Example 5 | Example 42 | Example 43 | Example 44 | Example 45 |
|---|---|---|---|---|---|---|
| Formulation | Oil and/or fat A (rapeseed oil) | 12.5 | ← | ← | ← | ← |
| | Soybean protein material A | 14.0 | ← | ← | | |
| | Microorganism-derived protein material A | | | | 14.0 | ← |
| | Glycerin | 55.5 | | | | |
| | Sorbitol | | 45.0 | | | |
| | Maltose | | | 41.0 | | |
| | Sodium chloride | | | | 19.0 | |
| | Sodium L-ascorbate | | | | | 28.0 |
| | Water | 18.0 | 28.5 | 32.5 | 54.5 | 45.5 |
| | Total | 100.0 | ← | ← | ← | ← |
| Composition | Crude protein content (%) | 11.1 | ← | ← | 6.1 | ← |
| | Crude protein content/oil and/or fat ratio (%) | 89 | ← | ← | 49 | ← |
| Conditions | Emulsification pressure (Mpa) | 150 | ← | ← | ← | ← |
| | Path number | 5 | ← | ← | 7 | 5 |
| Evaluation | Emulsion particle size (nm) | 53.0 | 60.4 | 58.9 | 83.1 | 71.8 |
| | Transmittance (T%) | 83.9 | 76.3 | 80.3 | 57.8 | 71.1 |
| | Evaluation | 3 | 2 | 3 | 2 | 2 |

### Spray-Drying

The emulsion of Example 43 was spray-dried to obtain Example 46 as an emulsified powder. In the spray drying, an inlet temperature was 140°C, an outlet temperature was 90°C, and the moisture of the dried product was 3.0% by an ordinary pressure heating loss method. When the resulting powder was redissolved in water and evaluated, the particle size was 69.2 nm, the transmittance (T%) was 80.3, and the nanoemulsion was maintained. From this, it was found that the emulsion of the present invention could be dried, the quality was not impaired at the time of redissolution, and restrictions on distribution and use could be significantly reduced.

### Kokumi taste

In particular, when the present invention is used for imparting a flavor to a food, the flavor is strongly developed as compared with an oil-in-water emulsion having a particle size of more than 100 µm, and the present invention has a high function as a kokumi taste imparting agent.

The emulsion was diluted with water so that each oily material was 0.1 mass% to prepare a sample. Four skilled panelists tasted aqueous dilutions of the emulsions obtained in Examples and Comparative Examples, and sensory evaluation was performed on the kokumi taste according to the following evaluation criteria. The kokumi taste referred to herein means a sense of volume or a sense of richness that is felt after food is put into the oral cavity and then swallowed.

For the evaluation, the kokumi taste was rated at 5 to 0 points according to the following criteria. That is, 5 points: very good (richness is very strongly felt in aftertaste), 4 points: good (richness is strongly felt), 3 points: normal (richness is felt), 2 points: slightly poor (richness is slightly felt), 1 point: poor (richness is hardly felt in aftertaste), and 0 point: equivalent to water. 3 or more points were determined to be acceptable.

An average value of the panelists' evaluations was obtained as shown in Table 7. It was confirmed that the kokumi taste was more strongly developed as the particle size decreased. In addition, the development of the kokumi taste was not affected by sugar or salt. One of the major characteristics of the present invention is that a similar effect can be obtained not by a taste substance but by an emulsion of triglyceride.

**(Table 7) Sensory testing of each emulsion**

| | (mass%) | Example 5 | Example 17 | Example 30 | Comparative Example 3 | Comparative Example 8 | Comparative Example 12 | Example 43 | Example 44 |
|---|---|---|---|---|---|---|---|---|---|
| Formulation | Oil and/or fat A | 12.5 | ← | | 12.5 | ← | 7.0 | 12.5 | ← |
| | Oil and/or fat F | | | 12.5 | | | | | |
| | Soybean protein material A | 14.0 | 6.0 | 14.0 | 4.0 | 14.0 | | 14.0 | |
| | Microorganism-derived protein material A | | | | | | | | 14.0 |
| | Soybean protein material E | | | | | | 14.0 | | |
| | Glycerin | 55.5 | 63.5 | 55.5 | 65.5 | 55.5 | ← | | |
| | Maltose | | | | | | | 41.0 | |
| | Sodium chloride | | | | | | | | 19.0 |
| | Water | 18.0 | ← | ← | ← | ← | 23.5 | 32.5 | 54.5 |
| | Total | 100.0 | ← | ← | ← | ← | ← | ← | ← |
| Composition | Crude protein content (%) | 11.1 | 4.8 | 11.1 | 3.2 | 11.1 | 12.6 | 11.1 | 6.1 |
| | Crude protein content/oil and/or fat ratio (%) | 89 | 38 | 89 | 25 | 89 | 180 | 89 | 49 |
| Conditions | Emulsification pressure (Mpa) | 150 | ← | ← | ← | 50 | 150 | ← | ← |
| | Path number | 5 | ← | ← | ← | ← | ← | ← | 7 |
| Evaluation | Emulsion particle size (nm) | 53.0 | 76.8 | 65.0 | 100.1 | 115.1 | 83984 | 58.9 | 83.1 |
| | Transmittance (T%) | 83.9 | 59.6 | 70.2 | 35.8 | 21.2 | 14.3 | 80.3 | 57.8 |
| | Evaluation | 3 | 2 | 2 | 1 | 1 | 1 | 3 | 2 |
| | Kokumi taste | 5 | 4 | 3 | 2 | 1 | 0 | 5 | 4 |

### Industrial Applicability

According to the present invention, it is possible to obtain an oil-in-water emulsion having a particle size of 100 nm or less without using a synthetic emulsifier. This makes it possible to prepare a flavorful oily material-containing emulsion having excellent transparency and to apply the emulsion to foods and the like.

## Claims

1. An oil-in-water emulsion having an emulsion particle size of 100 nm or less, the oil-in-water emulsion comprising from 0.5 to 35 mass% of an oily material, from 1 to 80 mass% of a readily water-soluble substance, from 5 to 70 mass% of water, and a protein material having properties described below in an amount of from 30 to 1200 mass% in terms of crude protein content relative to the oily material, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.

2. The oil-in-water emulsion according to claim 1, wherein an NSI is 80 or more.

3. The oil-in-water emulsion according to claim 1, wherein a total amount of the readily water-soluble substance and water is 2 times by mass or more an amount of the protein material.

4. The oil-in-water emulsion according to claim 1, wherein the readily water-soluble substance has a solubility of 30 (g/100 g) or more in water and a higher boiling point than water.

5. The oil-in-water emulsion according to claim 1, wherein a 0.5 mass% dispersion of the oily material in water has a transmittance (660 nm) of 50% or more.

6. The oil-in-water emulsion according to claim 1, wherein a water content is 65 mass% or less.

7. The oil-in-water emulsion according to any one of claims 1 to 6, comprising no emulsifier.

8. The oil-in-water emulsion according to claim 1, wherein an NSI is 80 or more; a total amount of the readily water-soluble substance and water is 2 times by mass or more an amount of the protein material; the readily water-soluble substance has a solubility of 30 (g/100 g) or more in water and a higher boiling point than water; a 0.5 mass% dispersion of the oily material in water has a transmittance (660 nm) of 50% or more; a water content is 65 mass% or less; and no emulsifier is contained.

9. A method for producing an oil-in-water emulsion having an emulsion particle size of 100 nm or less, the method comprising mixing from 0.5 to 35 mass% of an oily material with a solution containing a protein material in an amount of from 30 to 1200 mass% in terms of crude protein content relative to the oily material, from 1 to 80 mass% of a readily water-soluble substance, and from 5 to 70 mass% of water; and applying a shear force to the mixture.

10. The method for producing an oil-in-water emulsion according to claim 9, wherein an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30 to 95%; and the protein material has an NSI of 80 or more.

11. The method for producing an oil-in-water emulsion according to claim 9, wherein a high-pressure emulsification apparatus is used for emulsification of an oil-in-water emulsion, and a pressure at the time of the emulsification is 50 MPa or more.

12. The method for producing an oil-in-water emulsion according to claim 9, wherein no emulsifier is used.

13. The method for producing an oil-in-water emulsion according to claim 9, wherein an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30 to 95%; the protein material has an NSI of 80 or more; a high-pressure emulsification apparatus is used for emulsification of an oil-in-water emulsion; a pressure at the time of the emulsification is 50 MPa or more; and no emulsifier is used.

14. A method for producing an emulsion powder, the method comprising drying the oil-in-water emulsion described in any one of claims 9 to 13.
